# EUROPÄISCHE PATENTSCHRIFT

(11) **EP 4 541 696 B1**
(45) Veröffentlichungstag und Bekanntmachung des Hinweises auf die Patenterteilung: **15.04.2026**
(21) Anmeldenummer: 23204687.0
(22) Anmeldetag: 19.10.2023
(51) Int. Cl.: B62D 21/18, B60P 1/48, B60P 1/54, B62D 27/06, B62D 33/063, B62D 63/02

(54) **BAUFAHRZEUG**
CONSTRUCTION VEHICLE
VÉHICULE DE CONSTRUCTION

(43) Veröffentlichungstag der Anmeldung: 23.04.2025
(73) Patentinhaber: Kern Tunneltechnik SA, 6900 Lugano-Paradiso (CH)
(72) Erfinder: KERN, Reiner, 6900 Lugano- Paradiso (CH)
(74) Vertreter: Glück Kritzenberger Patentanwälte PartGmbB

(56) Entgegenhaltungen:
- EP-A2- 1 008 549
- CN-A- 102 502 431
- NL-A- 7 809 263
- US-B2- 8 954 237

## Beschreibung

Ein modulartiges Baufahrzeug ist aus der CN 102502431 und der US 8,954,237 bekannt.

Die CN 102 502 431 A offenbart ein Baufahrzeug, das aus zwei lösbar miteinander verbundenen Antriebsmodulen besteht. Diese weisen jeweils mindestens eine angetriebene Achse auf, wobei mindestens eines der beiden Antriebsmodule eine Achse mit lenkbaren Rädern aufweist. Außerdem umfasst das Baufahrzeug mindestens ein Kabinenmodul und eine mit dem Kabinenmodul verbundene Steuerung für die beiden Antriebsmodule. Die Antriebsmodule sind über eine erste mechanische Verbindungseinrichtung miteinander verbunden. Das Kabinenmodul ist mit dem vorderen Antriebsmodul verbunden.

Die vorliegende Erfindung beabsichtigt, ein Baufahrzeug insbesondere für den Tunnelbau zu schaffen, welches geeignet ist, sich unter den engen und unebenen Verhältnissen eines Tunnelbaus fortzubewegen und zu dienen als Träger von Lasten, wie zum Beispiel Tunnelschalungselementen oder Baustoffen.

Diese Aufgabe wird durch ein Baufahrzeug mit den Merkmalen des Anspruchs 1 gelöst. Vorteilhafte Weiterbildungen der Erfindung sind Gegenstand der abhängigen Ansprüche.

Zu diesem Zweck hat das Baufahrzeug zwei lösbar miteinander verbundene Antriebsmodule, die jeweils wenigstens eine angetriebene Achse mit lenkbaren Rädern aufweisen. Unter den engen Verhältnissen eines Tunnels wird in der Regel die Anordnung einer Achse pro Antriebsmodul ausreichend sein. Für bereits weitgehend fertiggestellte Tunnel und den Transport sehr schwerer Lasten kann jedoch wenigstens eines der Antriebsmodule mehrachsig sein. Es ist ausreichend, dass eines der beiden Antriebsmodule lenkbare Räder aufweist. Zur Verbesserung der Kurvengängigkeit und der Manövrierfähigkeit ist es jedoch vorzuziehen, dass beide Antriebsmodule lenkbare Räder aufweisen.

Weiterhin besteht das Baufahrzeug aus wenigstens einem Kabinenmodul, das mit jedem der beiden Antriebsmodule verbindbar ist. Vorzugsweise hat das Baufahrzeug ein Kabinenmodul an jedem seiner beiden Längsenden und ist dadurch in der Lage, in beiden Richtungen zu fahren und dabei von einer Frontkabine aus geführt zu werden. Der herkömmliche Begriff vorwärts und rückwärts entfällt somit bei diesem Baufahrzeug, weil dieses zur Mitte hin, d.h. um eine quer zur Fahrzeuglängsachse verlaufende Ebene in der Mitte seiner Länge weitgehend spiegelsymmetrisch ausgebildet ist. Weiterhin weist das Baufahrzeug eine Steuerung für die beiden Antriebsmodule auf, welche sowohl die Leistung als auch den Lenkeinschlag der beiden Antriebsmodule steuert, vorzugsweise unabhängig voneinander. Die Steuerung ist mit dem wenigstens einen Kabinenmodul verbunden, so dass der Wagen von dem Kabinenmodul aus betätigt werden kann. Falls an beiden Längsenden Kabinenmodule angeordnet sind, ist die Steuerung selbstverständlich mit beiden Kabinenmodulen verbunden. In diesem Fall ist vorzugsweise eine Prioritätsschaltung vorgesehen,

die die Steuerung nur einem der beiden Kabinenmodule zuweisen, die von einem Fahrer besetzt ist. Es ist jedoch prinzipiell möglich, dass gerade bei Fahrten in engen Biegungen der Lenkeinschlag des zugeordneten Antriebsmoduls von der zugeordneten Kabine aus gesteuert wird, so dass zum Rangieren zwei Personen notwendig sind, eine in der in Fahrtrichtung vorne liegenden Kabine und eine in der in Fahrtrichtung hinten liegenden Kabine. Diese können dann ihre Lenkachse und die Seiten- und Höhenposition ihrer Kabine so optimal steuern, dass engste Kurvenradien von beispielsweise nur 5 m mit dem Baufahrzeug befahren werden können. Hierbei ist anzufügen, dass es sich bei den beiden Antriebsmodulen um Schwerlastmodule handelt, die eine Tragkraft von etlichen Tonnen haben. Vorzugsweise hat das gesamte Baufahrzeug bestehend aus den zwei miteinander verbundenen Antriebsmodulen eine Nutzlast von 20 bis 40 t. Die beiden Antriebsmodule können entweder direkt oder durch ein Zentralmodul miteinander verbunden sein, je nach dem gewünschten Einsatzzweck. Für diese Verbindung ist eine erste Verbindungseinrichtung vorgesehen. Für die Verbindung der Kabinenmodule mit den Längsenden des jeweiligen Antriebsmoduls ist eine zweite mechanische Verbindungseinrichtung ausgebildet, die entweder identisch zur ersten Verbindungseinrichtung ausgebildet sein kann, sich jedoch auch unterscheiden kann, wenn zum Beispiel die Verbindungseinrichtung auch hydraulische und elektrische Kopplungseinrichtungen umfasst, um mit dem Verbinden des Kabinenmoduls gleichzeitig die Steuerung des entsprechenden Antriebsmoduls durch die Kabine sicherzustellen. Eine derartige elektrische und/oder hydraulische Kopplung kann selbstverständlich auch durch die erste mechanische Verbindungseinrichtung realisiert werden, so dass beispielsweise beide Antriebsmodule von der Kabine eines einzigen Kabinenmoduls aus gelenkt werden können.

Prinzipiell ist es möglich, dass die beiden Antriebsmodule identisch ausgebildet sind. Es ist jedoch vorzuziehen, dass die beiden Antriebsmodule unterschiedliche Funktionen wahrnehmen. So kann zum Beispiel in einem der beiden Antriebsmodule, das als Servicemodul ausgebildet ist, eine elektrische und/oder hydraulische Versorgung für das Baufahrzeug angeordnet sein. In dem anderen Antriebsmodul können dann beispielsweise mehr antriebstechnische Komponenten angeordnet sein. Eine derartige Aufteilung ist sinnvoll, weil die entsprechenden Aggregate teilweise sehr groß sind und eine Aufteilung der Komponenten auf beide Antriebsmodule die hydraulische und/oder elektrische Versorgung verkomplizieren würde.

In einer vorteilhaften Weiterbildung der Erfindung enthält das wenigstens eine Kabinenmodul einen Tragrahmen mit einem Stellmechanismus für die horizontale und/oder vertikale Position einer Kabine des Kabinenmoduls. Dies hat den Vorteil, dass sowohl die vertikale als auch seitliche Position der Kabine an dem Kabinenmodul eingestellt werden kann. In engen Kurven kann so zum Beispiel die Kabine seitlich zum Innenradius der Kurve verschoben werden, so dass diese nicht an einem den äußeren Kurvenradius begrenzenden Element eines Baus anstößt. Zum anderen hat die Höhenverstellbarkeit der Kabine den Vorteil, dass insbesondere beim Be- und Entladen eine bessere Übersicht über die Be- und Entladesituation erreicht werden kann. Auch bei sehr hügeligem Untergrund kann durch die Höhenverstellbarkeit der Kabine die Bodenfreiheit verbessert werden, was eine Bewegung des Baufahrzeugs auch auf sehr unebenem Untergrund ermöglicht.

Der Stellmechanismus für die Position der Kabine am Kabinenrahmen weist vorzugsweise einen Schlitten auf, der an einer zur Fahrzeugachse quer verlaufenden horizontalen Führung bewegbar ist, wobei auf dem Schlitten ein Höhenstellmechanismus angeordnet ist, an welchem die Kabine höhenverstellbar gehalten ist.. Ein derartiger Stellmechanismus ist leicht zu realisieren und robust, insbesondere unter den rauen Verhältnissen eines Tunnelbaus, bei welchen in der Regel viel Staub in der Luft liegt.

In einer vorteilhaften Weiterbildung der Erfindung enthält die Steuerung eine Einheit zur koordinierten Lenkung der Räder und zur Seitenpositionierung der Kabine in Abhängigkeit von den Eingaben eines in der wenigstens einen Kabine angeordneten Steuerelements und/oder in Abhängigkeit von Abstandssensoren der Steuerung. Der Führer des Baufahrzeugs kann zum Beispiel über ein Steuerelement, wie zum Beispiel ein Steuerrad oder ein Joystick, den Kurvenradius bis zu einem minimalen Kurvenradius selektieren, wobei mit dem enger werdenden Kurvenradius automatisch auch eine Seitenpositionierung der Kabinen stattfindet, um ein

Anschlagen der Kabine an Gegenständen im äußeren Kurvenradius zu vermeiden. Alternativ oder zusätzlich können auch Abstandssensoren oder Positionssensoren an den Enden des Baufahrzeugs angeordnet sein, die die Geometrie der Baustelle in Fahrtrichtung erfassen und somit selbstständig den Kurvenradius erfassen können und quasi selbsttätig den Lenkeinschlagswinkel und die Position der Kabine in Abhängigkeit von den Sensorsignalen einstellen. Diese Sensoren können jedoch auch rein unterstützend für die Führungsperson des Baufahrzeugs dienen.

Wie bereits oben ausgedrückt, enthält das Baufahrzeug vorzugsweise an seinen beiden Längsenden jeweils ein Kabinenmodul, so dass es in gleicher Weise vorwärts oder rückwärts von einer Frontkabine aus betätigt werden kann. Das Fahrzeug hat dann keine Front und kein Heck mehr, sondern Front und Heck bestimmen sich nach der Fahrtrichtung des Fahrzeugs. Dies hat den Vorteil, dass in engen Tunneln, wo ein Wenden des Fahrzeugs unmöglich ist, das Fahrzeug nach dem Ent- oder Beladen im Tunnelbereich einfach durch die Steuerung von der vormals rückwärtigen Kabine aus wieder aus dem Tunnel herausgefahren werden kann.

Es ist prinzipiell ausreichend, dass eines der beiden Antriebsmodule lenkbare Räder aufweist. Vorzugsweise weisen jedoch beide Antriebsmodule lenkbare Räder auf, was den minimalen Kurvenradius und die Manövrierbarkeit des Baufahrzeugs beträchtlich verbessert, da die Räder der Radachsen beider Antriebsmodule gegenläufig ausgelenkt werden können.

Im Falle beide Antriebsmodule lenkbare Räder aufweisen, ist vorzugsweise der Lenkeinschlag der Räder eines Antriebsmoduls unabhängig von dem Lenkeinschlag der Räder des anderen Antriebsmoduls steuerbar. Dies ermöglicht das Fahren engster Kurvenradien bei entgegengesetztem Lenkeinschlag der Räder als auch ein seitlich versetztes Fahren, wenn die Räder der beiden Antriebsmodule in die gleiche Richtung ausgelenkt sind. Die Manövriermöglichkeiten durch diese Art der unabhängigen Steuerung ermöglichen somit den Einsatz des Baufahrzeugs in Bereichen, in denen bislang Baufahrzeuge dieser Größe nicht eingesetzt werden konnten.

Vorzugsweise ist in der Kabine des wenigstens einen Kabinenmoduls eine Steuerung für die Lenkachsen der beiden Antriebsmodule angeordnet, so dass sich beide Lenkachsen von einer Kabine aus steuern lassen. Unter sehr schwierigen Verhältnissen ist es natürlich auch möglich, dass die Kabinen beider stirnseitigen Kabinenmodule besetzt sind und die Fahrzeugführer nur die Lenkachse ihres eigenen Antriebsmoduls steuern, was ein Manövrieren auch in sehr diffizilen Situationen ermöglicht.

In einer vorteilhaften Weiterbildung der Erfindung haben die Antriebsmodule ein in etwa quaderförmiges Chassis, deren Höher geringer ist als ihre Breite und Länge. Während die Breite des Baufahrzeugs vorzugsweise zwischen 2 und 4 m liegt, kann die Länge, wie später noch ausgeführt wird, durch ein Zentralmodul variiert werden, so dass die Gesamtlänge inklusive zweier Kabinenmodule zwischen 8 m und 16 m variieren kann. Die Höhe des Chassis beträgt vorzugsweise zwischen 1,50 m und 2,50 m, insbesondere um die 2 m, was es ermöglicht, auf den Chassis Lasten abzulegen, ohne dass die Gesamthöhe inklusive der auf den Chassis abgelegten Lasten so hoch wird, dass eine Einfahrt in einen Tunnelbereich nicht mehr möglich ist. In diesem Fall ist vorzugsweise die Oberseite der Chassis eben beziehungsweise plan, und die Höhe der beiden Antriebsmodule ist identisch, so dass durch die Oberseite der beiden Antriebsmodule eine große längliche Traganordnung gebildet wird.

Vorzugsweise sind die erste und/oder zweite Verbindungseinrichtung durch sich horizontal erstreckende Nut/Feder-Verbindungen in folgender Weise gebildet. Die Nuten sind gebildet durch an den Stirnseiten der Hauptträger der Antriebsmodule ausgebildete Schlitze, insbesondere nebeneinander angeordnete Doppelschlitze mit einer gewissen vertikalen Erstreckung. Die komplementären Federelemente sind gebildet durch zwei nebeneinander angeordnete stirnseitig auskragende Eingriffsplatten an dem zu verbindenden Modul, z.B. dem Zentralmodul oder dem Kabinenmodul, die in die komplementären Schlitze an den Stirnseiten der Hauptträger der Antriebsmodule durchsetzen und dort festgelegt werden, z.B. durch Sicherungsbolzen. Diese Hauptträger, es sind vorzugsweise zwei nebeneinander verlaufende Hauptträger in dem Antriebsmodul verbaut, haben vorzugsweise eine höhere vertikale Erstreckung als horizontale Erstreckung quer zur Fahrtrichtung, wodurch in Lastrichtung des Baufahrzeugs eine große Steifheit erzielt wird.

Die Verbindungsstellung der Nut/Feder-Verbindungen dann vorzugsweise durch die Sicherungsbolzen realisiert, die fluchtende Ausnehmungen in den Hauptträgern der Antriebsmodule und in den Eingriffsplatten der anderen Module durchsetzen, so dass eine starre Verbindung der beiden zu verbindenden Module realisiert wird. Der gesamte Apparateaufwand lässt sich reduzieren, wenn die erste Verbindungseinrichtung und die zweite Verbindungseinrichtung identisch sind, so dass letztlich alle Module, das heißt die Antriebsmodule, die Kabinenmodule und nachher noch genannte weitere Module, wie z.B. Hebemodule oder Kranmodule, durch eine identische Verbindungseinrichtung miteinander starr und fest koppelbar sind.

In einer vorteilhaften Weiterbildung der Erfindung hat wenigstens eines der beiden Antriebsmodule einzeln aufgehängte Räder und/oder einzeln angetriebene Räder. Durch eine Einzelradaufhängung und einen einzelnen Antrieb jedes Rades, das heißt eines Allradantriebs des gesamten Baufahrzeugs, lässt sich die Manövrierbarkeit auf unebenem Untergrund und unter schwierigen Antriebsbedingungen beträchtlich verbessern.

Vorzugsweise weist das Baufahrzeug ein Zentralmodul auf, welches zwischen den beiden Antriebsmodulen verbindbar ist, wobei dieses Zentralmodul vorzugsweise Auflageplatten für den Transport von schweren Lasten aufweist. Das Zentralmodul hat somit rein mechanische Funktionen, nämlich die Kopplung der beiden Antriebsmodule und die Bereitstellung von Auflageplatten für schwere Lasten. So können zum Beispiel auf diesem Zentralmodul Tunnelschalungselemente abgelegt werden. Wie bereits angedeutet, hat das Baufahrzeug eine Lastkapazität von beispielsweise 32 t. Es kann insbesondere vorgesehen sein, dass das Baufahrzeug unterschiedlich lange Zentralmodule aufweist, wodurch sich die Gesamtlänge des Fahrzeugs und natürlich auch die Größe der Auflagefläche variieren lässt. Das Baufahrzeug kann somit genau den speziellen Anforderungen eines Tunnelbaus oder eines jedweden anderen Baus angepasst werden.

In einer vorteilhaften Weiterbildung der Erfindung hat das Baufahrzeug ein Hebemodul mit vertikalen hydraulischen Tragzylindern zur Verbindung zwischen dem Kabinenmodul und dem Antriebsmodul. Es sind somit bei einer symmetrischen Ausbildung des Baufahrzeugs mit zwei Kabinenmodulen dann jeweils an den beiden Längsenden zwischen den Antriebsmodulen und den Kabinenmodulen derartige Hebemodule vorgesehen, so dass sich durch die hydraulischen Tragzylinder Container oder normierte Tragelemente aufnehmen lassen. Das Hebemodul kann auch in das Kabinenmodul integriert sein.

In einer weiteren vorteilhaften Weiterbildung der Erfindung hat das Baufahrzeug ein Kranmodul mit wenigstens einem hydraulisch betätigbaren schwenkbaren Tragarm zur Verbindung zwischen dem Kabinenmodul einerseits und dem Antriebsmodul oder dem Hebemodul andererseits. Ein derartiges Kranmodul kann somit an den beiden Längsenden des Baufahrzeugs zwischen dem jeweiligen Antriebsmodul und dem Kabinenmodul oder Hebemodul angeordnet werden, so dass sich eine parallele Tragarmkonstruktion durch die beiden Kranmodule ergibt, was das Heben hoher und schwerer Lasten ermöglicht. Hierfür hat jedes Kranmodul vorzugsweise seitlich ausfahrbare Stützzylinder zur Abstützung am Boden, um ein Kippen des Baufahrzeugs beim seitlichen Aufheben schwerster Lasten zu vermeiden. Das Kranmodul kann wahlweise auch mit dem Hebemodul und/oder dem Kabinenmodul integriert ausgebildet sein.

Vorzugsweise erstrecken sich die Chassis der Antriebsmodule stirnseitig an ihrer dem Zentralmodul zugewandten Seite senkrecht nach oben. Vorzugsweise hat dann das Zentralmodul senkrecht nach oben ragende Versteifungsstreben, die an den stirnseitigen senkrechten Abschnitten der Antriebsmodule anliegen, wodurch eine hohe Steifheit in Lastrichtung (von oben) erzielt wird.

Es erübrigt sich, zu sagen, dass das Baufahrzeug nicht nur für Tunnelbauten, sondern auch für Brückenbauten und andere Bauten in engen und unwegsamen Verhältnissen eingesetzt werden kann.

Folgende Ausdrücke werden synonym verwendet: Module - Antriebsmodule, Kabinenmodule, Hebemodule, Kranmodule; Fahrzeuglängsachse - Fahrtrichtung; erste Verbindungseinrichtung - zweite Verbindungseinrichtung - Verbindungseinrichtung;
Es ist für den Fachmann offensichtlich, dass die oben beschriebenen Ausführungsformen der Erfindung in beliebiger Weise miteinander kombiniert werden können, solange diese sich nicht einander widersprechen.

Die Erfindung wird nachfolgend beispielsweise anhand der schematischen Zeichnung beschrieben. In dieser zeigen:
- Fig. 1: eine perspektivische Ansicht eines Baufahrzeugs mit zwei Antriebsmodulen, zwei Kabinenmodulen und einem Zentralmodul zum Verbinden der Antriebsmodule,
- Fig. 2: eine Explosionsdarstellung des Baufahrzeugs aus Fig. 1 mit genauerer Darstellung der Verbindungseinrichtung zwischen den Antriebsmodulen und dem Zentralmodul als auch zwischen den Antriebsmodulen und den Kabinenmodulen,
- Fig. 3: eine Seitenansicht des Baufahrzeugs aus den Fig. 1 und 2,
- Fig. 4: ein perspektivisches Detail der zweiten Verbindungseinrichtung zur Befestigung des Kabinenmoduls an den Antriebsmodul, welche zweite Verbindungseinrichtung in dem Ausführungsbeispiel der Fig. 1 und 2 identisch zur ersten Verbindungseinrichtung ist,
- Fig. 5: eine perspektivische Darstellung eines Antriebsmoduls von schräg oben vom Längsende her,
- Fig. 6: eine perspektivische Ansicht des Antriebsmoduls aus Fig. 5 von schräg unten,
- Fig. 7: eine perspektivische Darstellung eines als Servicemodul ausgebildeten Antriebsmoduls von schräg unten,
- Fig. 8: eine stirnseitige Ansicht des Antriebsmoduls aus Fig. 6 und 7 vom Längsende aus gesehen,
- Fig. 9: eine perspektivische Ansicht eines Zentralmoduls zur Verbindung der beiden Antriebsmodule,
- Fig. 10A: eine Seitenansicht eines kurzen Zentralmoduls,
- Fig. 10B: eine Seitenansicht eines langen Zentralmoduls zur Erzielung eines längeren Baufahrzeugs,
- Fig. 11: eine stirnseitige Ansicht auf das Kabinenmodul mit integriertem Hebemodul,
- Fig. 12: eine perspektivische Ansicht des Kabinenmoduls aus Fig. 12 von schräg oben vorne, und
- Fig. 13: eine perspektivische Ansicht des Kabinenmoduls aus den Fig. 11 und 12 von schräg oben hinten,
- Fig. 14: ein Bild zur Darstellung des seitlichen Kabinenversatzes des Baufahrzeugs aus den vorstehenden Figuren in einer engen Kurve,
- Fig. 15: ein Bild zur Darstellung der Tätigkeit der Hebemodule, die in den Kabinenmodulen integriert sind,
- Fig. 16: ein Bild zur Darstellung des Tragens von Tunnelschalungselementen auf den Auflageplatten am Kabinenmodul und am Zentralmodul,
- Fig. 17: ein Bild zur Darstellung einer Ausführungsform mit einem Schwenkkranmodul an beiden Kabinenmodulen, und
- Fig. 18: ein Bild zur Darstellung eines Drehkranmoduls an einem Kabinenmodul mit integrierter Abstützhydraulik.

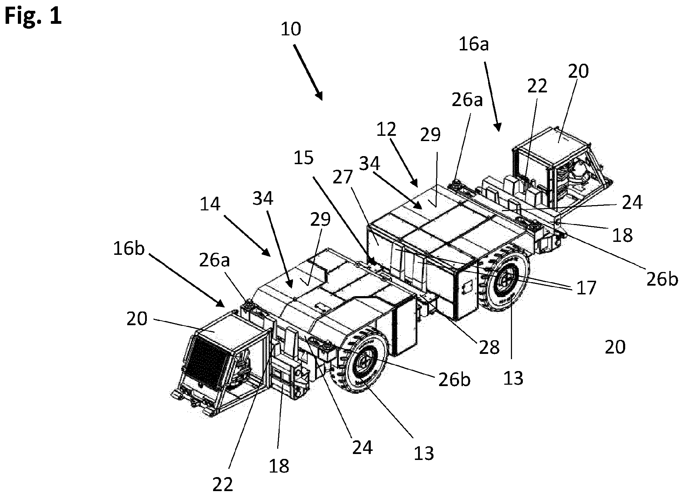

Die Fig. 1 bis 3 zeigen ein Baufahrzeug 10 bestehend aus einem ersten Antriebsmodul 12 und einem zweiten Antriebsmodul 14, die über ein Zentralmodul 15 miteinander gekoppelt sind. An ihren Längsenden haben beide Antriebsmodule 12, 14 ein Kabinenmodul 16a, 16b, so dass das Baufahrzeug 10 frontgesteuert in beide Richtungen fahren kann.

Jedes der beiden Antriebsmodule 12, 14 enthält eine Radachse mit einzeln angetriebenen und lenkbaren Rädern 13, so dass das Baufahrzeug ein allradgetriebenes Fahrzeug ist mit zwei lenkbaren Achsen, die vorzugsweise auch noch unabhängig voneinander gesteuert werden können. Auf diese Weise ist das Befahren kleinster Kurvenradien oder ein seitlich versetztes Fahren möglich, wenn die Räder beider Antriebsmodule 12, 14 den identischen Lenkeinschlag haben. Wenigstens eines der Antriebsmodule kann jedoch auch mehrere Radachsen aufweisen.

Jedes der beiden Antriebsmodule 12, 14 enthält ein quaderförmiges Chassis 34, dessen Höhe geringer ist als deren Breite und Länge. Die Oberseite 29 des Chassis 34 jedes Antriebsmoduls 12, 14 befindet sich somit auf einer Höhe von vorzugsweise etwa 2 m, während jedes Antriebsmodul 12, 14 vorzugsweise eine Breite zwischen 1,8 m und 3 m aufweist und eine Länge von 2 m bis 5 m. Unter Berücksichtigung der Kabinenmodule 16a, 16b ergibt sich somit eine Gesamtlänge des Fahrzeugs zwischen 10 m und 18 m je nach Länge des Zentralmoduls und nach der Ausstattung der Kabinenmodule mit zusätzlichen Hebe- oder Kranmodulen.

Es ist natürlich möglich, die beiden Antriebsmodule 12, 14 identisch auszubilden. Im vorliegenden Fall ist jedoch das erste Antriebsmodul 12 als Servicemodul ausgebildet und verfügt über eine elektrische und hydraulische Versorgung für das Baufahrzeug 10, während beispielsweise in dem zweiten Antriebsmodul 14 mehr antriebstechnische oder steuerungstechnische Komponenten angeordnet sein können. Jedes Antriebsmodul 12, 14 verfügt über eine Radachse mit lenkbaren Rädern 13.

Jedes Kabinenmodul 16a, 16b hat eine an einer horizontalen Schlittenführung 18 quer zur Fahrzeuglängsachse verfahrbare Kabine 20, die über einen Höhenstellmechanismus 22 höhenverstellbar an einem Schlitten der Schlittenführung gehalten ist, so dass die Kabine 20 seitlich als auch in der Höhe relativ zu den Antriebsmodulen 12, 14 verfahren werden kann. Dies ermöglicht es, enge Kurven oder auch sehr unwegsames Gelände mit dem Baufahrzeug 10 zu befahren.

Weiterhin verfügt jedes Kabinenmodul 16 a, 16b über ein integriertes Hebemodul 24 mit zwei außenseitigen vertikalen Tragzylindern 26 a, b, so dass an dem Baufahrzeug 10 in einer rechteckigen Konfiguration vier vertikalen hydraulischen Tragzylindern 26 a, b vorgesehen sind, durch die schwere Container oder Tragplattformen angehoben und abgesetzt werden können. Das Hebemodul 24 kann auch separat von dem Kabinenmodul 16 a, b ausgebildet und ebenfalls über eine erste/zweite Verbindungseinrichtung mit dieser verbunden sein.

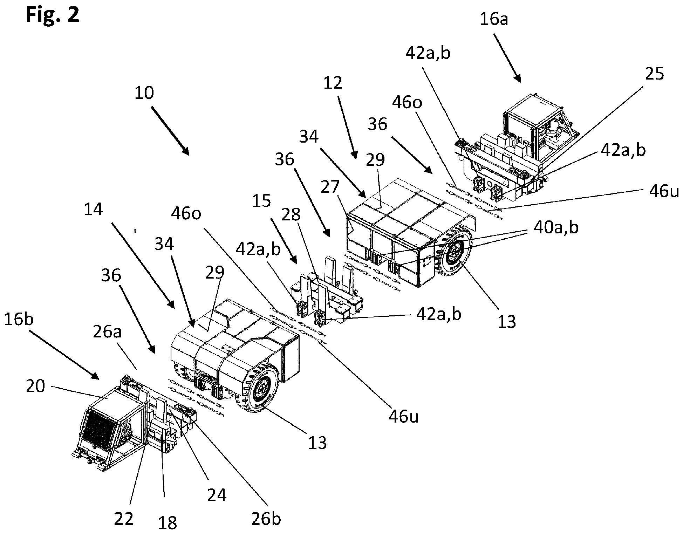

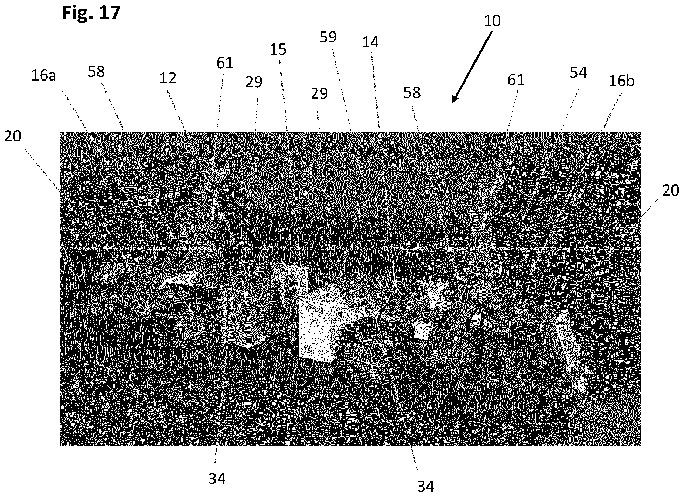

Das Zentralmodul 15 hat, wie aus der Explosionsdarstellung des Baufahrzeugs in Fig. 2 besser ersichtlich ist, Auflageplatten 28 zum Aufsetzen schwerer Lasten. Zudem verlaufen die dem Zentralmodul 15 zugewandten Stirnseiten 27 der Chassis 29 der Antriebsmodule 12, 14 senkrecht. An diesen Stirnseiten 27 stützt sich das Zentralmodul 15 mit vertikal nach oben ragenden Versteifungsstreben 17 ab, wodurch die Steifheit des Baufahrzeugs 10 insgesamt verbessert wird. Mit den Auflageplatten 28 des Zentralmoduls, insbesondere im Zusammenwirken mit den Auflageplatten 25 der Kabinenmodule 16a, 16b werden somit niedrig liegende Auflagen geschaffen, um insbesondere schwere Lasten im Tunnelbereich, z.B. Schalungselemente, zu transportieren (Fig. 17). Hier ist zu berücksichtigen, dass die Auflageplatten 28 des Zentralmoduls und die Auflageplatten der Kabinenmodule 16a, 16b gegenüber der Oberseite 29 der Chassis 34 der beiden Antriebsmodule 12, 14 deutlich niedriger angeordnet sind, z.B. in einer Höhe von etwa 1 m, so dass getragene Lasten nicht nach oben nicht so hoch hinausragen, was unter beengten Tunnelverhältnissen besonders wichtig ist.

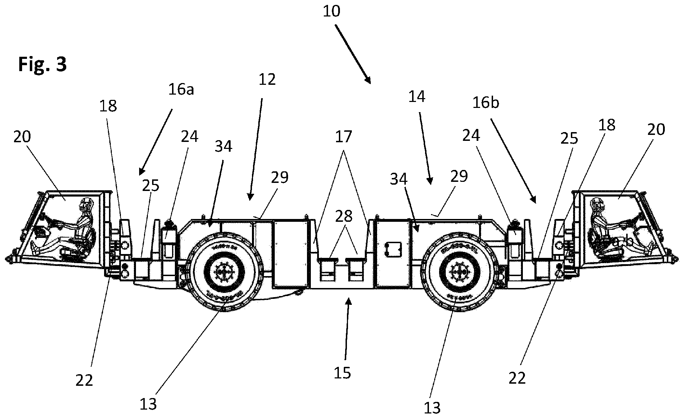

Fig. 3 zeigt das Baufahrzeug gemäß Fig. 1 in Seitenansicht. Es ist hier gut zu sehen, dass in den Kabinenmodulen 16a,b zwischen dem Horizontalschlitten 22 und dem Hebemodul 24 eine niedrig angeordnete Auflagefläche 25 gebildet ist, die sich auf der gleichen Höhe befindet wie die Auflageplatten 28 des Zentralmoduls 16. Auf diese Weise wird für Schalungsteile und andere zu transportierende Bauelemente eine sehr tief liegende Auflage gebildet, was zur Folge hat, dass die Gesamthöhe des Baufahrzeugs 10 mit aufgeladenen Teilen nicht zu hoch wird.

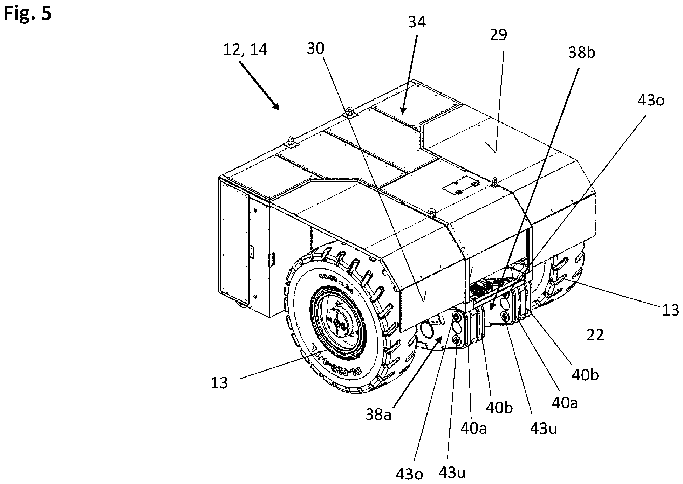

Fig. 3 zeigt ebenfalls sehr deutlich das Vorsehen von stirnseitigen vertikalen Stützstreben 17 an dem Zentralmodul 15, die an den senkrechten einander zugewandten Stirnwänden 27 der beiden Antriebsmodule 12, 14 anliegen und damit eine hohe Steifheit und Verwindungssteifigkeit auch bei Auflage hoher Lasten gewährleistet. Fig. 5 verdeutlicht diese Komponenten noch einmal in der Explosionsdarstellung.

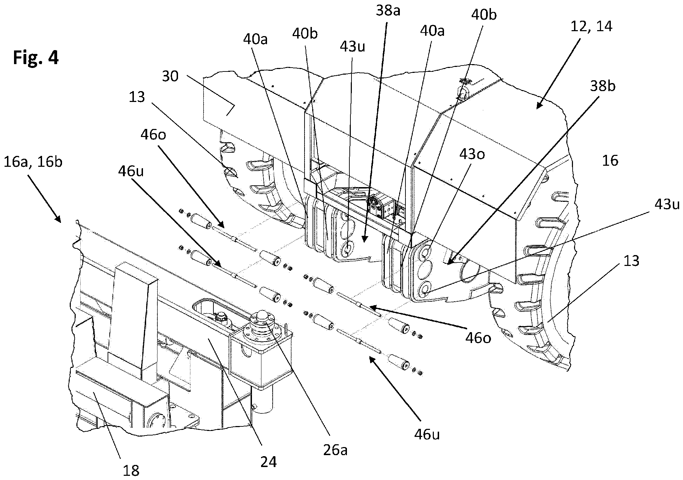

Fig. 2 und 4 zeigen deutlicher die Verbindungseinrichtung 36 zwischen den Antriebsmodulen 12, 14, den Kabinenmodulen 16a, 16b und dem Zentralmodul 15.

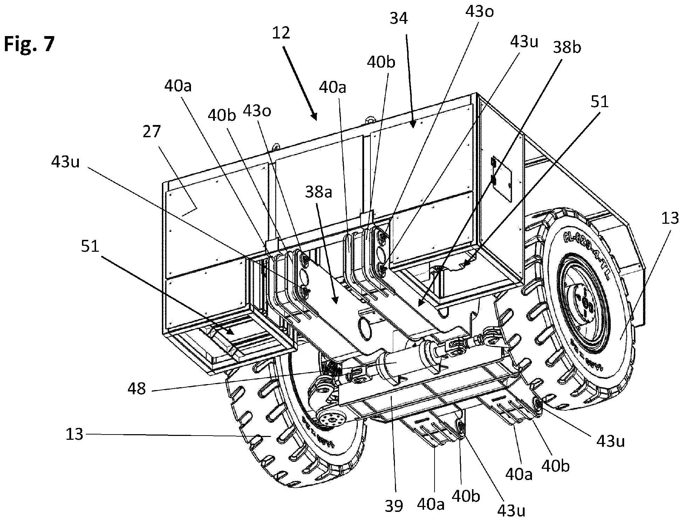

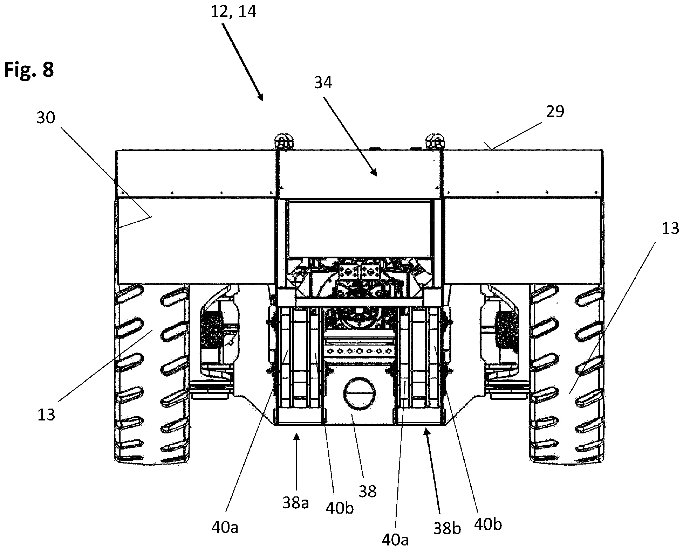

Jedes Antriebsmodul 12, 14 hat zwei nebeneinander angeordnete Längsträger 38a, 38b (siehe insbesondere die Figuren 7 und 8), die über die Tragstrebe 39 der Räder 13 miteinander verbunden sind und somit den Hauptträger und damit das Traggestell der Antriebmodule 12, 14 bilden. Diese beiden Längsträger 38a, 38b erstrecken sich von der inneren Stirnseite 27 bis hin zur äußeren Stirnseite 30 der Antriebsmodule 12, 14.

An ihren stirnseitigen Enden haben die Längsträger 38a, 38b zwei horizontal nebeneinander angeordnete Schlitze 40a, 40b, die sich in Fahrzeuglängsrichtung erstrecken. Die Schlitze 40a, 40b sind somit an den Stirnseiten der Längsträger 38a, 38b offen und dienen damit als Nut der als Nut/Federsystem ausgebildeten Verbindungseinrichtung 36.

Auf der Gegenseite haben das Zentralmodul 15 und die beiden Kabinenmodule 16a, 16b an ihren den Schlitzen gegenüberliegenden Seiten jeweils zwei auskragende Eingriffsplatten 42a, 42b, die passend und formschlüssig in die Schlitze 40a, 40b an den Enden der Längsträger 38a, 38b eingreifen. Auf diese Weise wird eine feste und starre mechanische Verbindung zwischen den Antriebsmodulen 12, 14 einerseits und dem Zentralmodul 15 bzw. dem Kabinenmodul 16a, 16b andererseits realisiert. In Verbindungsstellung sind die Eingriffsplatten 42a, 42b weitgehend vollständig in den Schlitzen 40a, 40b aufgenommen. Diese Verbindungsstellung der mechanischen Verbindungseinrichtung 36 wird nun pro Längsträger 38a, 38b durch einen oberen Sicherungsstift 46o und einen unteren Sicherungsstifte 46u gesichert. Diese beiden Sicherungsstifte 46o, 46u durchsetzen in Verbindungsstellung die fluchtenden obere und untere horizontale Ausnehmungen 43o, 43u in den Längsträgern, als auch entsprechende Ausnehmungen 44o, 44u in den Eingriffsplatten 42a, 42b. Die Ausnehmungen 43o, 43u in den Längsträgern 38a, 38b als auch die Ausnehmungen 44o, 44u in den Eingriffsplatten 42a, 42b fluchten in Verbindungsstellung und können dann durch die beiden Sicherungsstifte 46o, 46u durchsetzt werden, womit sich die Verbindungseinrichtung 36 dann in einer gesicherten Verbindungsstellung befindet.

Fig. 4 zeigt die Ausbildung der ersten Verbindungseinrichtung 36 zwischen dem Antriebsmodul 12, 14 und dem Kabinenmodul 16a, 16b, welche erste Verbindungseinrichtung im Ausführungsbeispiel identisch ausgebildet ist zu der zweiten Verbindungseinrichtung 36 zwischen dem Antriebsmodul 12, 14 und dem Zentralmodul 15.

Fig. 5 zeigt in perspektivischer Ansicht das äußere stirnseitige Ende 30 eines Antriebsmoduls 12, 14 mit den zugehörigen Teilen der Verbindungseinrichtung 36, nämlich jeweils zwei Schlitze 40a, 40b aufweisende Zentralträger 38a, 38b der Antriebsmodule 12, 14 zur Verbindung mit dem Kabinenmodul 16 a,b als auch die oberen und unteren horizontalen Ausnehmungen 43o, 43u in den Längsträgern für die Sicherungsstifte 46o, 46u (Fig. 4) für die Verbindungsstellung der Verbindungseinrichtung 36. Weiter zu sehen ist die Gestaltung der Antriebsmodule 12, 14 mit einem kubischen Chassis 34, welches alle wesentlichen Elemente, nämlich Antriebselemente, hydraulische und elektrische Elemente 49 oder die elektrische und hydraulische Versorgung 51 des Antriebsmoduls 12, 14 staub- und schmutzsicher umgibt, wobei das Chassis 33 eine plane Oberfläche 29 bildet, die auf einer relativ niedrigen Höhe ist, so dass transportierte Lasten auf einem sehr niedrigen Höhenlevel transportiert werden können, was unter beengten Tunnelbaubedingungen notwendig ist.

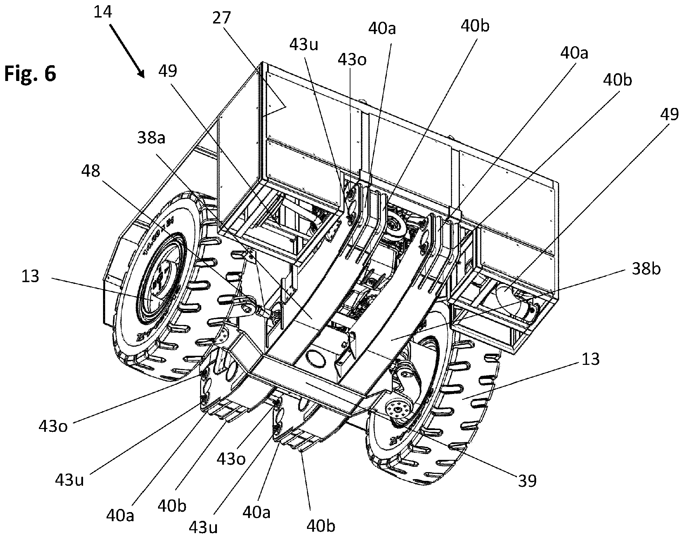

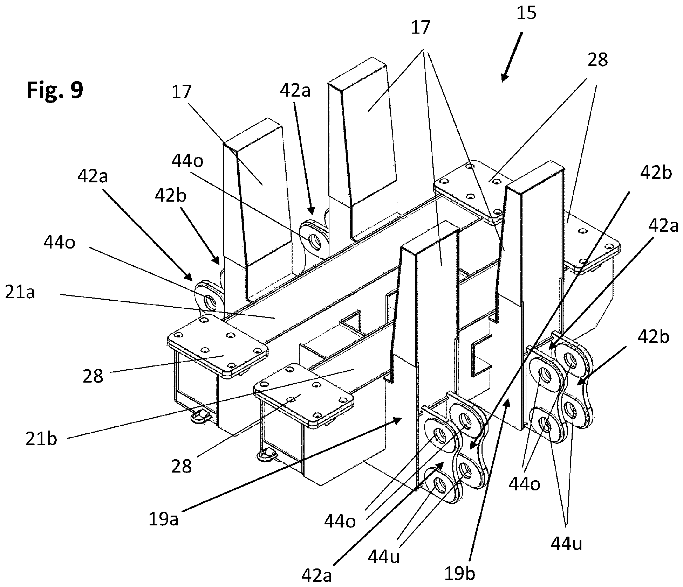

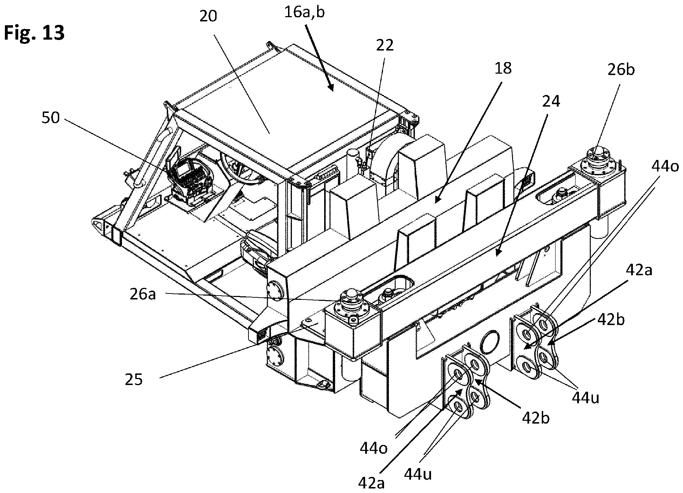

Fig. 6 zeigt das erste Antriebsmodul 12 in einer perspektivischen Ansicht schräg von unten und zwar von der mittleren Stirnseite 27. Deutlich zu sehen ist, dass sich die Längsträger 38a,b über die gesamte Länge des Antriebsmoduls 12, 14 erstrecken und somit bis an die beiden Stirnseiten 27, 30 des Antriebsmoduls 12, 14 ragen. Die beiden Längsträger 38a, 38b sind miteinander verbunden über eine Tragstrebe 39 für die Räder 13. An den Längsenden der Längsträger 38a, 38b sind jeweils zwei Schlitze 40a, 40b für die Eingriffsplatten 42a, 42b der Kabinenmodule 16a, 16b (Fig. 13) und des Zentralmoduls 15 (Fig. 9) angeordnet. Die beiden Räder 13 sind über einen entsprechenden Lenkmechanismus 48 lenkbar. Das Chassis 34 bietet Platz für die Unterbringung antriebstechnischer und steuerungstechnischer Komponenten 49.

In analoger Weise zeigt Fig. 7 eine schräge perspektivische Ansicht von unten des zweiten Antriebsmoduls 14 ebenfalls mit Lenkmechanismus 48 für die beiden Räder 13, wobei dieses zweite Antriebsmodul 14 als Serviceeinheit ausgebildet ist, welche die elektrische und hydraulische Versorgung 51 des Baufahrzeugs in dem Chassis 34 schmutzsicher unterbringt.

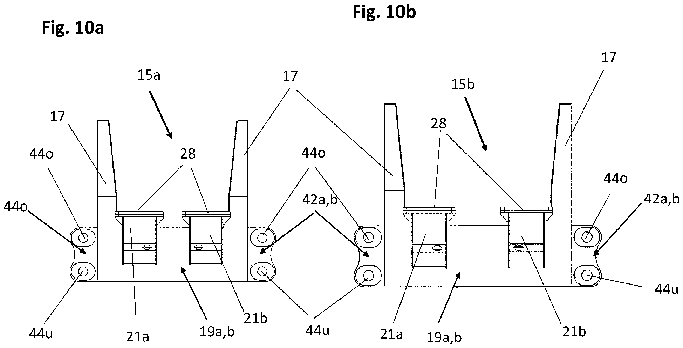

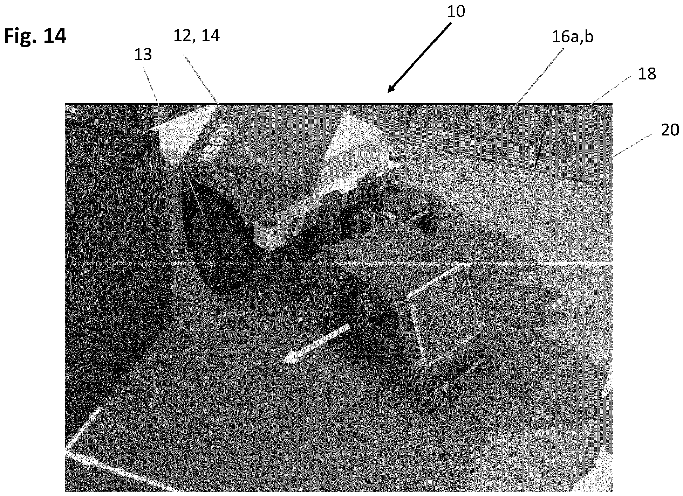

Fig. 8 zeigt die stirnseitige Ansicht eines Antriebsmoduls 12, 14 mit dem Antriebsmodul-seitigen Teil der Verbindungseinrichtung 36, der durch die Schlitze 40a, 40b gebildet ist, die mit auskragenden Eingriffsplatten 42 a,b des Zentralmoduls 16 (Fig. 10) oder des Kabinenmoduls (Fig. 14) ineinandergreifen beziehungsweise kämmen und in ihrer ineinandergegriffenen Verbindungslage durch die Sicherungsbolzen 46o, 46u gesichert werden.

Fig. 9 zeigt den prinzipiellen Aufbau des Zentralmoduls 15. Das Zentralmodul besteht aus zwei in Längsrichtung des Baufahrzeugs verlaufenden Hauptträgern 19a, 19b, die mit den Längsträgern 38a, 38b der Antriebsmodule 12, 14 fluchten. An den beiden Stirnseiten der Hauptträger 19a, 19b sind als Zentralmodul-seitiger Teil der Verbindungseinrichtung36 jeweils zwei auskragende Eingriffsplatten 42a, 42b angeordnet, die in Verbindungsstellung der Verbindungseinrichtung 36 die Schlitze 40a, 40b der Antriebsmodule auf beiden Stirnseiten durchsetzen. Diese Verbindungsstellung wird mittels Sicherungsbolzen 46o, 46u (Fig. 4) gesichert, welche die fluchtenden Ausnehmungen 43o, 43u der Antriebsmodule 12, 14 und der korrespondierenden Ausnehmungen 44o, 44u des Zentralmoduls oder des Kabinenmoduls durchsetzen.

Fig. 10a und Fig. 10b zeigen zwei unterschiedliche Zentralmodule 15a, 15b mit unterschiedlicher Länge der Hauptträger 19a, 19b, so dass in Abhängigkeit von den zu transportierenden Lasten sich ein längerer Radstand zwischen den beiden Antriebsmodulen 12, 14 und damit eine unterschiedliche Gesamtlänge des Baufahrzeugs 10 ergibt.

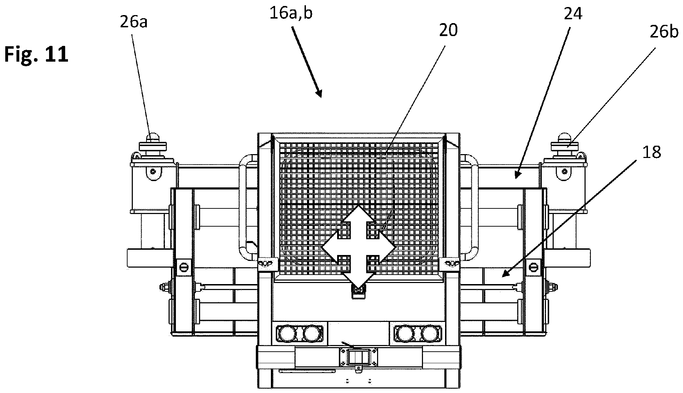

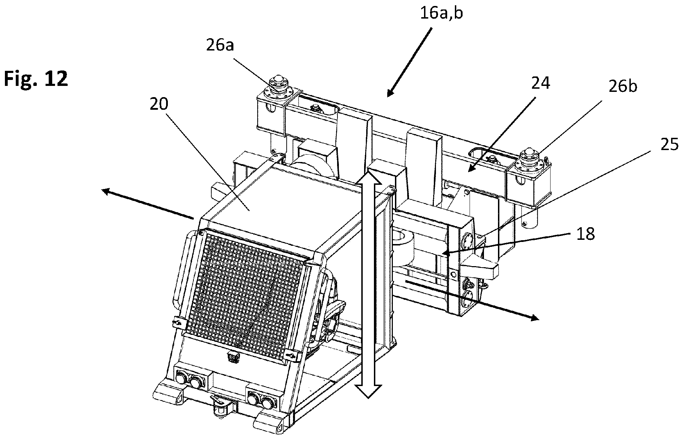

Fig. 11, 12 und 13 zeigen die Kabinenmodule 16a, 16b detaillierter.

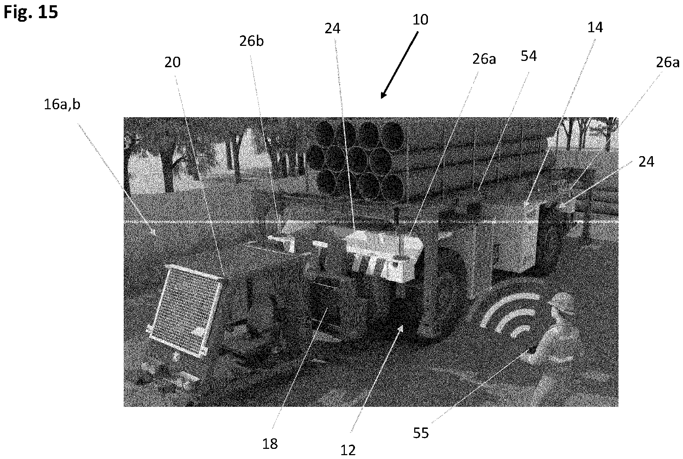

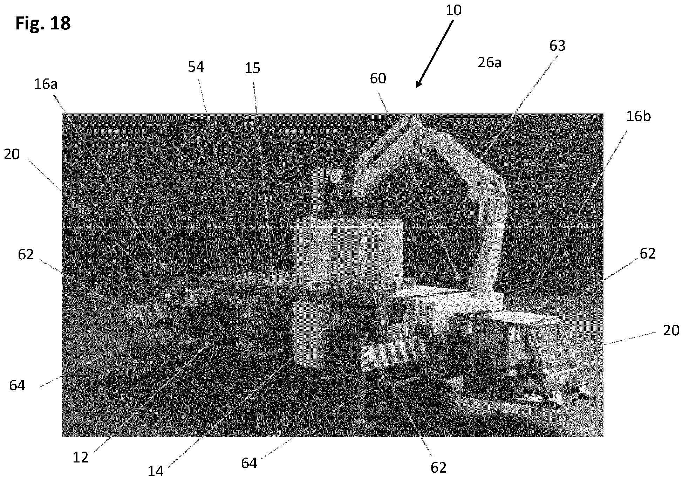

Der viereckige Richtungspfeil in Fig. 11 zeigt an, dass die Kabine 20 an der Horizontalführung 18 und über den Höhenstellmechanismus 22 (Fig. 13) sowohl seitlich, das heißt quer zur Fahrtrichtung des Baufahrzeugs 10, als auch in ihrer Höhe verstellbar ist. Fig. 13 zeigt darüber hinaus ein Steuerrad 50 und Fußpedale 52 zur Betätigung des Motors der Antriebsmodule 12, 14, der vorzugsweise als schwerer Dieselantrieb ausgebildet ist, als auch der Lenkung der Antriebsmodule 12, 14. Prinzipiell können beide Antriebsmodule 12, 14 über einen eigenen Antrieb verfügen oder alternativ hat nur eines der beiden Antriebsmodule 12, 14 einen Antriebsmotor und koppelt über eine Welle die Antriebsenergie in das zweite Antriebsmodul ein. Deutlich zu sehen in den Fig. 11 bis 13 ist auch die Ausbildung des Hebemoduls 24, bestehend aus einer quer zur Fahrzeuglängsachse verlaufenden Tragkonstruktion an deren beiden Längsenden vertikalen Tragzylinder 26a,b angeordnet sind, so dass durch beide Kabinenmodule 16a, 16b an den beiden Enden des Baufahrzeugs 10 insgesamt vier dieser Tragzylinder 26a, 26b gebildet sind, die in der Lage sind, Container und schwere Tragplattformen hochzuheben (Fig. 15 und 18) und damit zu transportieren. Hier ist zu berücksichtigen, dass das Hebemodul 24 auch als separates Modul ausgebildet sein kann, welches mit dem Kabinenmodul 16a, 16b in gleicher Weise über die Verbindungseinrichtung 36 verbindbar ist wie ein Antriebsmodul 12, 14. In diesem Fall muss auf der anderen Seite des Hebemoduls 24 eine Schlitzanordnung 40a, 40b vorgesehen sein, wie sie in den Fig. 4 bis 8 an den Enden der Längsträgern 38a, 38b der Antriebsmodule 12, 14 ausgebildet ist.

Das Bild aus Fig. 14 zeigt das seitliche Verfahren (siehe Pfeil) der Kabine 20 entlang der horizontalen Schlittenführung 18 an den Innenradius einer engen Kurve, was den Kurvenradius des Baufahrzeugs wesentlich verringert.

Fig. 15 zeigt die Tätigkeit der vertikalen Tragzylinder 26a, 26b zum Anheben und Absenken schwerer Lasten, hier eines Tragrahmens für Baumaterialien. Die Tätigkeit der vertikalen Tragzylinder 26a, 26b kann über eine Fernsteuerung 55 gesteuert werden, eventuell auch bei ausgeschaltetem Motor des Baufahrzeugs 10.

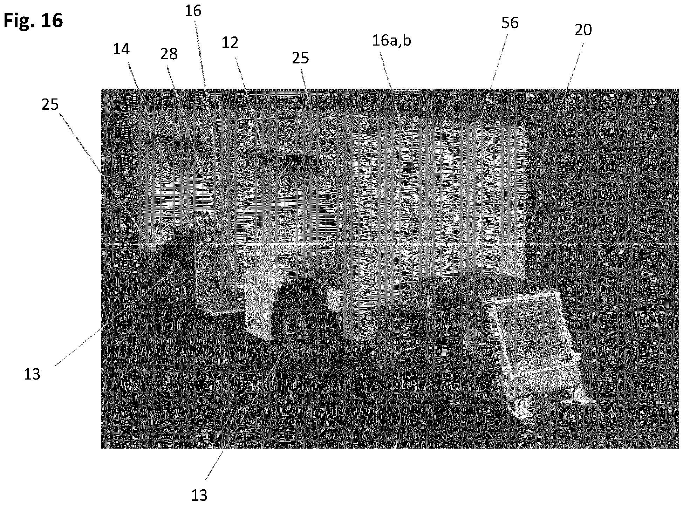

Fig. 16 zeigt die Bedeutung der tief liegenden Auflageplatten 25 der Kabinenmodule und 28 des Zentralmoduls zum Transportieren von Tunnelschalungselementen 56. Durch die niedrigen Auflageplatten 25, 28 ragen die Tunnelschalungselemente nicht so hoch hinaus, was für die Zugänglichkeit eines niedrigeren Tunnelbereichs entscheidend sein kann.

Fig. 17 zeigt ein Schwenkkranmodul 58 welches an dem Kabinenmodul 16a, 16b zwischen dem Hebemodul 24 und der Horizontalschlittenführung 24 angeordnet ist. Hier ist an jedem Kabinenmodul 16a, 16b ein Schwenkkranmodul 58 mit einem quer zur Fahrzeuglängsachse schwenkbaren Schwenkarm 61 angeordnet, so dass durch die Schwenkarme 61 der beiden Schwenkkranmodule 58 beidseitig der Antriebsmodule 12, 14 schwere Lasten, wie z.B. ein Baucontainer 59 auf die Oberseiten 29 der Chassis 34 der Antriebsmodule 12, 14 heraufheben und von dort herunterheben und abstellen lassen.

Alternativ kann gemäß Fig. 18 an jedem Kabinenmodul 16a, 16b, in dem gezeigten Ausführungsbeispiel nur an einem Kabinenmodul 16b, oder zwischen dem Kabinenmodul 16a, 16b und dem Antriebmodul 12, 14 auch ein Drehkranmodul 60 angeordnet sein, welches einen rotierbaren mehrgliedrigen Hebearm 63 und eine Abstützvorrichtung 62 mit vertikalen Stützzylindern 64 enthält. Mittels des Drehkranmoduls 60 können Lasten von beiden Seiten des Baufahrzeugs 10 entweder auf die Oberseite 29 der Chassis 34 der Antriebsmodule 12, 14 gehoben werden, oder auf einen Tragrahmen 54 für Baumaterial, der auf den vertikalen Tragzylindern 26a, 26b der Hebemodule 24 abgestützt ist.

Die Erfindung ist nicht auf das dargestellte Ausführungsbeispiel beschränkt, sondern kann innerhalb des Schutzbereichs der Ansprüche variiert werden. Hier ist noch einmal darauf hinzuweisen, dass das Kabinenmodul 16a, 16b sowohl das Hebemodul 24 als auch das Schwenkkranmodul 58 und/oder das Drehkranmodul 60 integriert aufweisen kann, wahlweise mit seitlicher Abstützvorrichtung 62. Diese Module 24, 58, 60 können jedoch auch separat von dem Kabinenmodul 16a, 16b ausgebildet sein und über die Verbindungseinrichtung 36 mit den Antriebsmodulen 12, 14 verbunden sein. Das Modulsystem des Baufahrzeugs 10 der vorliegenden Erfindung ermöglicht eine sehr individuelle Zusammenstellung des Baufahrzeugs entsprechend den am Tunnel oder an der Baustelle vorherrschenden Erfordernissen und bietet somit eine maßgeschneiderte Lösung für alle auftretenden Anforderungen.

### Bezugszeichenliste:

- 10: Baufahrzeug
- 12: erstes Antriebsmodul
- 13: Räder der Antriebsmodule
- 14: zweites Antriebsmodul
- 15: Zentralmodul zur Verbindung der beiden Antriebsmodule
- 16a, b: Kabinenmodule
- 17: Vertikale Versteifungsstreben des Zentralmoduls zum Anliegen an die vertikalen Stirnseiten der Antriebsmodule
- 18: horizontale Schlittenführung quer zur Fahrtrichtung
- 19a, b: Hauptträger des Zentralmoduls
- 20: Fahrzeugkabine
- 21a, b: Querträger des Zentralmoduls zum Tragen der Auflageplatten
- 22: Höhenstellmechanismus für die Fahrzeugkabine an dem Schlitten der Schlittenführung
- 24: Hebemodul mit zwei vertikalen hydraulischen Tragzylindern, evtl. integriert mit Kabinenmodul
- 25: Auflagefläche für Lasten am Kabinenmodul zwischen Hebemodul und Horizontalschlitten
- 26a, b: vertikale hydraulische Tragzylinder des Hebemoduls
- 27: einander zugewandte senkrechte Stirnseiten des Chassis der Antriebsmodule
- 28: Auflageplatten für Lasten am Zentralmodul
- 29: Oberseite des Chassis der Antriebsmodule
- 34: Chassis der Antriebsmodule
- 36: Verbindungseinrichtung zwischen den Modulen in der Art eines Nut/Feder-Systems
- 38a, b: zwei zentrale Längsträger der Antriebsmodule, die sich bis zu beiden Stirnseiten erstrecken
- 39: Tragstrebe für die Räder, welche die Längsträger verbindet und mit diesen den Hauptträger der Antriebsmodule bildet
- 40a, b: Schlitze an beiden Enden der Längsträger der Antriebsmodule als Nut-Teil der Verbindungseinrichtung
- 42a, b: zum Eingriff in die Schlitze bestimmte auskragende Eingriffsplatten an beiden abgewandten Stirnseiten des Zentralmoduls und an einer Stirnseite des Kabinenmoduls
- 43o, u: obere und untere Ausnehmungen in den Enden der Längsträger horizontal und quer zur Fahrzeuglängsachse orientiert
- 44o, u: obere und untere Ausnehmungen in den Eingriffsplatten, die mit den Ausnehmungen in den Längsträgern in Verbindungsstellung fluchten
- 46o, u: oberer und unterer Sicherungsstift zum Durchsetzen der oberen bzw. unteren Ausnehmungen
- 48: Lenkmechanismus für die Räder des Baufahrzeugs
- 49: antriebstechnische und steuertechnische Komponenten in einer der beiden Antriebsmodule des Baufahrzeugs
- 50: Steuergerät in der Kabine, verbunden mit der Steuerung des Baufahrzeugs, hier Lenkrad oder Joystick
- 51: elektrische und hydraulische Versorgung des Baufahrzeugs
- 52: Steuergerät in der Kabine, verbunden mit der Steuerung des Baufahrzeugs, hier Fußpedale
- 54: Tragrahmen für Baumaterial
- 55: Fernsteuerung für das Hebemodul und/oder das Schwenkkranmodul oder das Drehkranmodul
- 56: Tunnelschalungselemente
- 58: seitlich schenkendes Schwenkkranmodul
- 59: Baucontainer
- 60: Drehkranmodul
- 61: Schwenkarm des Schwenkkranmoduls
- 62: seitlich ausfahrbare hydraulische Abstützvorrichtung des Schwenkkranmoduls oder Drehkranmoduls
- 63: drehbarer mehrgliedriger Tragarm des Drehkranmoduls
- 64: vertikale hydraulische Stützzylinder der Abstützvorrichtung

## Patentansprüche

1. Baufahrzeug (10), bestehend aus
- zwei lösbar miteinander verbundenen Antriebsmodulen (12, 14), die jeweils wenigstens eine angetriebene Achse aufweisen, wobei wenigstens eines der beiden Antriebsmodule (12, 14) eine Achse mit lenkbaren Rädern (13) aufweist,
- wenigstens einem Kabinenmodul (16a, 16b), das mit jedem der beiden Antriebsmodule (12, 14) verbindbar ist, und
- eine mit dem wenigstens einen Kabinenmodul (16a, 16b) verbundene Steuerung für die beiden Antriebsmodule (12, 14),
wobei die Antriebsmodule (12, 14) eine erste mechanische Verbindungseinrichtung (36) aufweisen, über die sie miteinander verbunden sind, und wobei das Kabinenmodul (16a, 16b) mit einem beliebigen der beiden Antriebsmodule (12, 14) über eine zweite mechanische Verbindungseinrichtung (36) verbunden ist.

2. Baufahrzeug (10) nach Anspruch 1, **dadurch gekennzeichnet, dass** eines der Antriebsmodule (12, 14) als Servicemodul ausgebildet ist, die eine elektrische und/oder hydraulische Versorgung (51) für das Baufahrzeug (10) aufweist.

3. Baufahrzeug (10) nach Anspruch 1 oder 2, **dadurch gekennzeichnet, dass** eine Kabine (20) des wenigstens einen Kabinenmoduls (16a, 16b) seitlich an diesem verfahrbar gehalten ist, insbesondere dass das Kabinenmodul (16a, 16b) eine horizontale Schlittenführung (18) für die horizontale Position der Kabine (20) des Kabinenmoduls (16a, 16b) aufweist.

4. Baufahrzeug (10) nach Anspruch 3, **dadurch gekennzeichnet, dass** die Kabine (20) höhenverstellbar an dem Kabinenmodul (16a, 16b) gehalten ist, insbesondere mittels eines Höhenstellmechanismus (22) an der horizontalen Schlittenführung (18) der Kabineneinheit (16a, 16b).

5. Baufahrzeug (10) nach Anspruch 3 oder 4, **dadurch gekennzeichnet, dass** die Steuerung eine Einheit zur koordinierten Lenkung der Räder (13) und Seitenpositionierung der Kabine (20) in Abhängigkeit von den Eingaben eines in der wenigstens einen Kabine angeordneten Steuerelements (50, 52) und/oder in Abhängigkeit von Abstandssensoren der Steuerung aufweist.

6. Baufahrzeug (10) nach einem der vorhergehenden Ansprüche, **dadurch gekennzeichnet, dass** es an seinen beiden Längsenden jeweils ein Kabinenmodul (16a, 16b) aufweist.

7. Baufahrzeug (10) nach einem der vorhergehenden Ansprüche, **dadurch gekennzeichnet, dass** beide Antriebsmodule (12, 14) lenkbare Räder (13) aufweisen und der Lenkeinschlag der Räder (13) eines Antriebsmoduls (12, 14) vorzugsweise unabhängig vom Lenkeinschlag der Räder (13) des anderen Antriebsmoduls (14, 12) steuerbar ist.

8. Baufahrzeug (10) nach einem der vorhergehenden Ansprüche, **dadurch gekennzeichnet, dass** in der Kabine (20) des wenigstens einen Kabinenmoduls wenigstens ein Steuergerät (50) für die Lenkachsen der beiden Antriebsmodule (12, 14) angeordnet ist.

9. Baufahrzeug (10) nach einem der vorhergehenden Ansprüche, **dadurch gekennzeichnet, dass** die Antriebsmodule (12, 14) ein in etwa quaderförmiges Chassis (34) aufweisen, deren Höhe geringer ist als ihre Breite und Länge.

10. Baufahrzeug (10) nach Anspruch 9, **dadurch gekennzeichnet, dass** die Oberseite (29) des Chassis (34) plan ist und die Höhe der beiden Antriebsmodule (12, 14) identisch ist.

11. Baufahrzeug (10) nach einem der vorhergehenden Ansprüche, **dadurch gekennzeichnet, dass** die erste und/oder zweite Verbindungseinrichtung (36) zur Verbindung der Module (12, 14, 15, 16a, 16b) durch formschlüssige Verbindungen (40a, b, 42a, b) des Nut/Feder-Typs gebildet sind.

12. Baufahrzeug (10) nach Anspruch 11, **dadurch gekennzeichnet, dass** in der Verbindungseinrichtung (36) an den Antriebsmodulen (12, 14), insbesondere an seinem Längsträgern (38a, 38b) stirnseitige Schlitze (40a, 40b) umfasst, die von auskragenden Eingriffsplatten (42a, 42b) an dem Kabinenmodul (16a, 16b) oder Zentralmodul (15) in einer Verbindungsstellung durchsetzt werden.

13. Baufahrzeug (10) nach Anspruch 12, **dadurch gekennzeichnet, dass** die Verbindungsstellung durch Sicherungsbolzen (46o, 46u) gesichert ist.

14. Baufahrzeug (10) nach einem der vorhergehenden Ansprüche, **dadurch gekennzeichnet, dass** die erste Verbindungseinrichtung (36) und die zweite Verbindungseinrichtung (36) identisch sind.

15. Baufahrzeug (10) nach einem der vorhergehenden Ansprüche, **dadurch gekennzeichnet, dass** wenigstens eines der beiden Antriebsmodule (12, 14) einzeln aufgehängte Räder (13) und/oder einzeln angetriebene Räder (13) aufweist.

16. Baufahrzeug (10) nach einem der vorhergehenden Ansprüche, **dadurch gekennzeichnet, dass** es ein Zentralmodul (15) aufweist, welches die beiden Antriebsmodule (12, 14) verbindet, welches Zentralmodul (15) vorzugsweise Auflageplatten (28) für den Transport von schweren Lasten aufweist.

17. Baufahrzeug (10) nach Anspruch 16, **dadurch gekennzeichnet, dass** es mehrere unterschiedlich lange Zentralmodule (15a, 15b) aufweist, die alternativ mit den Antriebsmodulen (12, 14) verbindbar sind, um so die Gesamtlänge des Baufahrzeugs (10) zu verändern.

18. Baufahrzeug (10) nach einem der vorhergehenden Ansprüche, **dadurch gekennzeichnet, dass** es ein Hebemodul (24) mit vertikalen hydraulischen Tragzylindern (26a, 26b) zur Verbindung zwischen dem Kabinenmodul (16a, 16b) und dem Antriebsmodul (12, 14) aufweist.

19. Baufahrzeug (10) nach Anspruch 18, **dadurch gekennzeichnet, dass** das Hebemodul (24) in dem Kabinenmodul (16a, 16b) integriert ausgebildet ist.

20. Baufahrzeug (10) nach einem der vorhergehenden Ansprüche, **dadurch gekennzeichnet, dass** es ein Kranmodul (58; 60) mit wenigstens einem hydraulischen schwenkbaren Tragarm (61; 63) zur Verbindung zwischen dem Kabinenmodul (16a, 16b) einerseits und dem Antriebsmodul (12, 14) oder dem Hebemodul (24) andererseits aufweist, wobei das Kranmodul (58; 60) mit dem Kabinenmodul (16a, 16b) integriert ausgebildet sein kann.

21. Baufahrzeug (10) nach Anspruch 20, **dadurch gekennzeichnet, dass** das Kranmodul (58; 60) eine seitlich ausfahrbare Abstützvorrichtung (62) zur Abstützung am Boden aufweist.

## Claims

1. Construction vehicle (10) comprising
- two detachably connected drive modules (12, 14), each of which has at least one driven axle, wherein at least one of the two drive modules (12, 14) has an axle with steerable wheels (13),
- at least one cabin module (16a, 16b) that can be connected to each of the two drive modules (12, 14), and
- a control system for the two drive modules (12, 14) connected to the at least one cabin module (16a, 16b),
wherein the drive modules (12, 14) have a first mechanical connection device (36) via which they are connected to each other, and wherein the cabin module (16a, 16b) is connected to any one of the two drive modules (12, 14) via a second mechanical connection device (36).

2. Construction vehicle (10) according to claim 1, **characterised in that** one of the drive modules (12, 14) is designed as a service module, which has an electrical and/or hydraulic supply (51) for the construction vehicle (10).

3. Construction vehicle (10) according to claim 1 or 2, **characterised in that** a cabin (20) of the at least one cabin module (16a, 16b) is held on the side of the latter in a movable manner, in particular **in that** the cabin module (16a, 16b) has a horizontal slide guide (18) for the horizontal position of the cabin (20) of the cabin module (16a, 16b).

4. Construction vehicle (10) according to claim 3, **characterised in that** the cabin (20) is held on the cabin module (16a, 16b) in a height-adjustable manner, in particular by means of a height adjustment mechanism (22) on the horizontal slide guide (18) of the cabin unit (16a, 16b).

5. Construction vehicle (10) according to claim 3 or 4, **characterised in that** the control system has a unit for coordinated steering of the wheels (13) and lateral positioning of the cabin (20) depending on the inputs of a control element (50, 52) arranged in at least one cabin and/or depending on distance sensors of the control system.

6. Construction vehicle (10) according to one of the preceding claims, **characterised in that** it has a cabin module (16a, 16b) at each of its two longitudinal ends.

7. Construction vehicle (10) according to one of the preceding claims, **characterised in that** both drive modules (12, 14) have steerable wheels (13) and the steering angle of the wheels (13) of one drive module (12, 14) can preferably be controlled independently of the steering angle of the wheels (13) of the other drive module (14, 12).

8. Construction vehicle (10) according to one of the preceding claims, **characterised in that** at least one control device (50) for the steering axles of the two drive modules (12, 14) is arranged in the cab (20) of the at least one cab module.

9. Construction vehicle (10) according to one of the preceding claims, **characterised in that** the drive modules (12, 14) have an approximately cuboid chassis (34) whose height is less than its width and length.

10. Construction vehicle (10) according to claim 9, **characterised in that** the upper side (29) of the chassis (34) is flat and the height of the two drive modules (12, 14) is identical.

11. Construction vehicle (10) according to one of the preceding claims, **characterised in that** the first and/or second connecting devices (36) for connecting the modules (12, 14, 15, 16a, 16b) are formed by positive connections (40a, b, 42a, b) of the tongue and groove type.

12. Construction vehicle (10) according to claim 11, **characterised in that** the connecting device (36) on the drive modules (12, 14) in particular on its longitudinal beams (38a, 38b), comprises end slots (40a, 40b) which are penetrated by projecting engagement plates (42a, 42b) on the cabin module (16a, 16b) or central module (15) in a connection position.

13. Construction vehicle (10) according to claim 12, **characterised in that** the connection position is secured by locking bolts (46o, 46u).

14. Construction vehicle (10) according to one of the preceding claims, **characterised in that** the first connecting device (36) and the second connecting device (36) are identical.

15. Construction vehicle (10) according to one of the preceding claims, **characterised in that** at least one of the two drive modules (12, 14) has individually suspended wheels (13) and/or individually driven wheels (13).

16. Construction vehicle (10) according to one of the preceding claims, **characterised in that** it has a central module (15) which connects the two drive modules (12, 14), which central module (15) preferably has support plates (28) for transporting heavy loads.

17. Construction vehicle (10) according to claim 16, **characterised in that** it has several central modules (15a, 15b) of different lengths, which can be connected alternatively to the drive modules (12, 14) in order to change the overall length of the construction vehicle (10).

18. Construction vehicle (10) according to one of the preceding claims, **characterised in that** it has a lifting module (24) with vertical hydraulic support cylinders (26a, 26b) for connection between the cabin module (16a, 16b) and the drive module (12, 14).

19. Construction vehicle (10) according to claim 18, **characterised in that** the lifting module (24) is integrated into the cabin module (16a, 16b).

20. Construction vehicle (10) according to one of the preceding claims, **characterised in that** it has a crane module (58; 60) with at least one hydraulically pivotable support arm (61; 63) for connection between the cabin module (16a, 16b) on the one hand and the drive module (12, 14) or the lifting module (24) on the other hand, wherein the crane module (58; 60) may be integrated with the cabin module (16a, 16b).

21. Construction vehicle (10) according to claim 20, **characterised in that** the crane module (58; 60) has a laterally extendable support device (62) for support on the ground.

## Revendications

1. Véhicule de construction (10) comprenant
- deux modules d'entraînement (12, 14) reliés entre eux de manière amovible, qui présentent chacun au moins un essieu entraîné, au moins l'un des deux modules d'entraînement (12, 14) présentant un essieu avec des roues directrices (13),
- au moins un module de cabine (16a, 16b) qui peut être relié à chacun des deux modules d'entraînement (12, 14), et
- une commande reliée audit au moins un module de cabine (16a, 16b) pour les deux modules d'entraînement (12, 14),
dans lequel les modules d'entraînement (12, 14) présentent un premier dispositif de liaison mécanique (36) par lequel ils sont reliés entre eux, et le module de cabine (16a, 16b) est relié à l'un quelconque des deux modules d'entraînement (12, 14) par un deuxième dispositif de liaison mécanique (36).

2. Véhicule de construction (10) selon la revendication 1, **caractérisé en ce que** l'un des modules d'entraînement (12, 14) est conçu comme un module de service qui présente une alimentation électrique et/ou hydraulique (51) pour le véhicule de construction (10).

3. Véhicule de construction (10) selon la revendication 1 ou 2, **caractérisé en ce qu'**une cabine (20) dudit au moins un module de cabine (16a, 16b) est maintenue de manière déplaçable latéralement sur celui-ci, en particulier **en ce que** le module de cabine (16a, 16b) présente un guidage à glissière horizontal (18) pour la position horizontale de la cabine (20) du module de cabine (16a, 16b).

4. Véhicule de construction (10) selon la revendication 3, **caractérisé en ce que** la cabine (20) est maintenue de manière réglable en hauteur sur le module de cabine (16a, 16b), en particulier au moyen d'un mécanisme de réglage en hauteur (22) sur le guidage à glissière horizontal (18) de l'unité de cabine (16a, 16b).

5. Véhicule de construction (10) selon la revendication 3 ou 4, **caractérisé en ce que** la commande présente une unité pour le braquage coordonné des roues (13) et le positionnement latéral de la cabine (20) en fonction des entrées d'un élément de commande (50, 52) disposé dans ladite au moins une cabine et/ou en fonction de capteurs de distance de la commande.

6. Véhicule de construction (10) selon l'une des revendications précédentes, **caractérisé en ce qu'**il présente un module de cabine (16a, 16b) à chacune de ses deux extrémités longitudinales.

7. Véhicule de construction (10) selon l'une des revendications précédentes, **caractérisé en ce que** les deux modules d'entraînement (12, 14) présentent des roues directrices (13) et que l'angle de braquage des roues (13) d'un module d'entraînement (12, 14) peut être commandé de préférence indépendamment de l'angle de braquage des roues (13) de l'autre module d'entraînement (14, 12).

8. Véhicule de construction (10) selon l'une des revendications précédentes, **caractérisé en ce qu'**au moins un appareil de commande (50) pour les essieux directeurs des deux modules d'entraînement (12, 14) est disposé dans la cabine (20) dudit au moins un module de cabine.

9. Véhicule de construction (10) selon l'une des revendications précédentes, **caractérisé en ce que** les modules d'entraînement (12, 14) présentent un châssis (34) approximativement parallélépipédique dont la hauteur est inférieure à sa largeur et à sa longueur.

10. Véhicule de construction (10) selon la revendication 9, **caractérisé en ce que** la face supérieure (29) du châssis (34) est plane et que la hauteur des deux modules d'entraînement (12, 14) est identique.

11. Véhicule de construction (10) selon l'une des revendications précédentes, **caractérisé en ce que** le premier et/ou le deuxième dispositif de liaison (36) pour relier les modules (12, 14, 15, 16a, 16b) sont formés par des liaisons par complémentarité de forme (40a, b, 42a, b) du type rainure/languette.

12. Véhicule de construction (10) selon la revendication 11, **caractérisé en ce que**, le dispositif de liaison (36) sur les modules d'entraînement (12, 14) comprend, en particulier sur ses longerons (38a, 38b), des fentes frontales (40a, 40b) qui sont traversées par des plaques d'engagement en saillie (42a, 42b) sur le module de cabine (16a, 16b) ou le module central (15) dans une position de liaison.

13. Véhicule de construction (10) selon la revendication 12, **caractérisé en ce que** la position de liaison est sécurisée par des boulons de fixation (46o, 46u).

14. Véhicule de construction (10) selon l'une des revendications précédentes, **caractérisé en ce que** le premier dispositif de liaison (36) et le deuxième dispositif de liaison (36) sont identiques.

15. Véhicule de construction (10) selon l'une des revendications précédentes, **caractérisé en ce qu'**au moins l'un des deux modules d'entraînement (12, 14) présente des roues suspendues individuellement (13) et/ou des roues entraînées individuellement (13).

16. Véhicule de construction (10) selon l'une des revendications précédentes, **caractérisé en ce qu'**il présente un module central (15) qui relie les deux modules d'entraînement (12, 14), lequel module central (15) présente de préférence des plaques d'appui (28) pour le transport de charges lourdes.

17. Véhicule de construction (10) selon la revendication 16, **caractérisé en ce qu'**il présente plusieurs modules centraux (15a, 15b) de longueurs différentes, qui peuvent être reliés alternativement aux modules d'entraînement (12, 14) afin de modifier la longueur totale du véhicule de construction (10).

18. Véhicule de construction (10) selon l'une des revendications précédentes, **caractérisé en ce qu'**il comprend un module de levage (24) avec des vérins hydrauliques verticaux (26a, 26b) pour la liaison entre le module cabine (16a, 16b) et le module d'entraînement (12, 14).

19. Véhicule de construction (10) selon la revendication 18, **caractérisé en ce que** le module de levage (24) est conçu de manière intégrée dans le module de cabine (16a, 16b).

20. Véhicule de construction (10) selon l'une des revendications précédentes, **caractérisé en ce qu'**il présente un module de grue (58 ; 60) avec au moins un bras porteur hydraulique pivotant (61 ; 63) pour la liaison entre le module de cabine (16a, 16b) d'une part et le module d'entraînement (12, 14) ou le module de levage (24) d'autre part, le module de grue (58 ; 60) pouvant être conçu de manière intégrée avec le module de cabine (16a, 16b).

21. Véhicule de construction (10) selon la revendication 20, **caractérisé en ce que** le module de grue (58 ; 60) présente un dispositif d'appui (62) pouvant être déployé latéralement pour s'appuyer sur le sol.
